# EUROPEAN PATENT SPECIFICATION

(11) **EP 3 579 436 B1**
(45) Date of publication and mention of the grant of the patent: **22.12.2021**
(21) Application number: 18176863.1
(22) Date of filing: 08.06.2018
(51) Int. Cl.: H04B 3/32

(54) **METHOD AND APPARATUS OF BACKHAULING A DISTRIBUTION POINT**
VERFAHREN UND VORRICHTUNG ZUR VERBINDUNG EINER VERTEILERSTELLE AN EIN ZUBRINGERNETZ
PROCÉDÉ ET DISPOSITIF POUR CONNECTER UN POINT DE DISTRIBUTION A UN RESEAU DE LIAISON

(43) Date of publication of application: 11.12.2019
(73) Proprietor: Nokia Solutions and Networks Oy, 02610 Espoo (FI)
(72) Inventor: Maes, Jochen, 2018 Antwerp (BE)
(74) Representative: Louis Pöhlau Lohrentz

(56) References cited:
- US-B2- 9 331 840
- LES HUMPHREY BT PLC UK: "G.fast: On Bonded G.fast backhaul for G.fast final drop;C725", ITU-T DRAFT; STUDY PERIOD 2017-2020; STUDY GROUP 15; SERIES C725, INTERNATIONAL TELECOMMUNICATION UNION, GENEVA ; CH , vol. 4/15 16 January 2018 (2018-01-16), pages 1-3, XP044237586, Retrieved from the Internet: URL:https://www.itu.int/ifa/t/2017/sg15/do cs/c/ties/T17-SG15-C-0725!!MSW-E.docx [retrieved on 2018-01-16]

## Description

### Field of the invention

Various example embodiments relate to a method and apparatus of backhauling a distribution point.

### Background

G.fast is finding first market adoption, with a large share being deployed in traditional shelve-based chassis in cabinet deployments. One aspect hampering mass adoption of the fiber to the distribution point (FTTdp) deployment model is the deep fiber roll-out needed to backhaul an abundance of scattered distribution point units (DPUs). An alternative to fiber backhaul is copper backhaul, where bonded and vectored Very-high-bit-rate digital subscriber line 2 (VDSL2) copper lines are used to backhaul G.fast DPUs. Some disadvantages of this approach are the low capacity that can be offered on the bonded VDSL backhaul link given the limitation in the number of available pairs and the desire to out-phase VDSL2 to free up more spectrum for G.fast. Recently, British Telecom has expressed interest to use bonded G.fast to backhaul G.fast DPUs.

Although easy in concept, this brings several challenges. One challenge of using bonded G.fast to backhaul G.fast is interference between the G.fast in the drop section (D-side) and the G.fast in the Exchange section (E-side). A concern is the coupling between E- and D-side near the distribution point (DP). For example, in downstream, the signal transmitted by the drop operator (D-O) will couple into the downstream receiver in the Exchange-residence (E-R), thereby limiting the downstream capacity in the backhaul. Similarly, in upstream, the D-side capacity is reduced by interference into the D-O receiver. Such coupling can be strong, especially if the E-side and D-side wires are physically wrapped together in a confined manipulation space.

"G.fast: On Bonded G.fast backhaul for G.fast final drop; C725" discloses a motivation for developing a solution for using bonded G.fast to provide backhaul for a fast DPU.

US 9,331,840 B2 discloses a method which comprises transmitting a delay value to each of a plurality of DSL transceivers, by a distribution point unit (DPU), and receiving a plurality of signals at substantially the same time, wherein each of the plurality of signals is from a different DSL transceiver in the plurality of DSL transceivers and transmitted at different times based on the delay value and a corresponding propagation delay.

### Summary of the Invention

An objective of the invention is to use bonded G. fast to backhaul G. fast DPUs without impacting the reach of the E-side backhaul.

The objective of the invention is achieved by the method and apparatus according to the claims.

According to one aspect of the present invention, there is provided a method for backhauling a distribution point, DP, connected to a backhauling node via a backhaul section and connected to at least one Customer Premises Equipment, via a drop section, communications over the backhaul and drop sections being organized into downstream and upstream time sub-frames; the method comprising: aligning a time of reception at the DP of a downstream sub-frame received from the backhaul section and a time of transmission at the DP of a downstream sub-frame transmitted over the drop section; and/or aligning a time of reception at the DP of an upstream sub-frame received from the drop section and a time of transmission at the DP of an upstream sub-frame transmitted over the backhaul section; wherein the method further comprises at least one of: i) transmitting over the backhaul section a quiet symbol at the last symbol position of an upstream sub-frame or at the first symbol position of a downstream sub-frame, in order to fulfill a minimum time gap constraint between the end of reception of non-quiet symbols of the upstream sub-frame from the backhaul section and the beginning of transmission of non-quiet symbols of the downstream sub-frame over the backhaul section; and ii) transmitting over the drop section a quiet symbol at the last symbol position of an upstream sub-frame or at the first symbol position of a downstream sub-frame, in order to fulfill a minimum time gap constraint between the end of reception of non-quiet symbols of the upstream sub-frame from the drop section and the beginning of transmission of non-quiet symbols of the downstream sub-frame over the drop section; and iii) transmitting over the drop section a quiet symbol at the last symbol position of a downstream sub-frame or at the first symbol position of an upstream sub-frame, in order to fulfill a minimum time gap constraint between the end of transmission of non-quiet symbols of the downstream sub-frame over the drop section and the beginning of reception of non-quiet symbols of the upstream sub-frame from the drop section.

In an embodiment, communications over at least one of the backhaul and drop sections are Time Division Duplexing, TDD, communications, and are organized into downstream and upstream time sub-frames for exclusive downstream and upstream communications respectively.

In an embodiment, communications over one of the backhaul and drop sections are full-duplex, FDX, communications, and are organized into downstream and upstream time sub-frames for FDX downstream-prioritized and FDX upstream-prioritized communications respectively.

In an embodiment, the backhauling node is further connected to at least one further DP, the method further comprising: aligning at the backhauling node a time of reception of upstream sub-frames from the DPs connected to the backhauling node.

In an embodiment, one of the DPs connected to the backhauling node is determined as a reference DP, wherein a communication line between the reference DP and the backhauling node is longer than respective communication lines between the other DPs and the backhauling node, and wherein at the reference DP, a time gap TG_{2,D1} between the end of transmission of the downstream sub-frame over the drop section and the beginning of reception of the upstream sub-frame from the drop section and a time gap TG_{1,D1} between the end of reception of the upstream sub-frame from the drop section and the beginning of transmission of the downstream sub-frame over the drop section fulfil a minimum time gap constraint.

In an embodiment, the backhauling node is further connected to at least one further DP, the method further comprising: determining a time gap value TG_{2,E} between the end of transmission of the downstream sub-frame over the backhaul section and the beginning of reception of the upstream sub-frame from the backhaul section in such a way that a capacity loss due to quiet symbols on the drop section is minimized.

In an embodiment, the DP is connected to more than one CPE, the method further comprising: aligning a time of reception at the DP of upstream sub-frames from the CPEs connected to the DP.

According to another aspect of the present invention, there is provided a distribution point, DP, comprising: a backhaul transceiver, connectable to a backhauling node via a backhaul section; a drop transceiver, connectable to a Customer Premises Equipment, CPE, via a drop section, communications over the backhaul and drop sections being organized into downstream and upstream time sub-frames; and a communication controller, configured to align a time of reception at the DP of a downstream sub-frame received from the backhaul section and a time of transmission at the DP of a downstream sub-frame transmitted over the drop section; and/or to align a time of reception at the DP of an upstream sub-frame received from the drop section and a time of transmission at the DP of an upstream sub-frame transmitted over the backhaul section; wherein the distribution point, DP (121, 421, 422) is further configured according to at least one of: the backhaul transceiver (1211) being configured to transmit a quiet symbol at the last symbol position of an upstream sub-frame transmitted over the backhaul section, in order to fulfill a minimum time gap constraint between the end of reception of non-quiet symbols of the upstream sub-frame from the backhaul section and the beginning of transmission of non-quiet symbols of the downstream sub-frame over the backhaul section; and the communication controller (1214) being further configured to: configure over the drop section a symbol at the last symbol position of an upstream sub-frame or at the first symbol position of a downstream sub-frame to be quiet, in order to fulfill a minimum time gap constraint between the end of reception of non-quiet symbols of the upstream sub-frame from the drop section and the beginning of transmission of non-quiet symbols of the downstream sub-frame over the drop section.

According to another aspect of the present invention, there is provided a backhauling node, connectable to a distribution point, DP, via a backhaul section, communications over the backhaul being organized into downstream and upstream time sub-frames; the backhaul node comprising: a communication controller, configured to configure over the backhaul section a symbol at the last symbol position of an upstream sub-frame or at the first symbol position of a downstream sub-frame to be quiet, in order to fulfill a minimum time gap constraint between the end of reception of non-quiet symbols of the upstream sub-frame from the backhaul section and the beginning of transmission of non-quiet symbols of the downstream sub-frame over the backhaul section.

According to another aspect of the present invention, there is provided a Customer Premises Equipment, CPE, connectable to a distribution point, DP, via a drop section, communications over the drop sections being organized into downstream and upstream time sub-frames; the CPE comprising: a transceiver, configured to transmit a quiet symbol at the last symbol position of an upstream sub-frame transmitted over the drop section, in order to fulfill a minimum time gap constraint between the end of reception of non-quiet symbols of the upstream sub-frame from the drop section and the beginning of transmission of non-quiet symbols of the downstream sub-frame over the drop section.

According to the present invention, it is possible to cancel at the DP the near-end crosstalk NEXT between the backhaul transceiver and the drop transceiver.

The solution in the present invention makes it possible to use bonded G. fast/G.mgfast to backhaul G. fast/G.mgfast DPUs without impacting the reach of the E side backhaul.

### Brief description of the figures

- Fig. 1: depicts a schematic block diagram of a network topology according to an embodiment of the present invention;
- Fig. 2: depicts schematically a timing diagram according to the prior art;
- Fig. 3: depicts schematically a timing diagram according to the embodiment shown in Fig. 1;
- Fig.4: depicts a schematic block diagram of a network topology according to another embodiment of the present invention;
- Fig. 5: depicts schematically a timing diagram according to the embodiment shown in Fig. 4.

Same or similar reference numerals refer to same or similar parts or components.

### Detailed description

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps is not limited to the specific embodiments, and the method steps may be performed in other possible sequence. Similarly, specific structural and functional details disclosed herein are merely representative for purposes of describing the embodiments. The invention described herein, however, may be embodied in many alternate forms and should not be construed as limited to only the embodiments set forth herein.

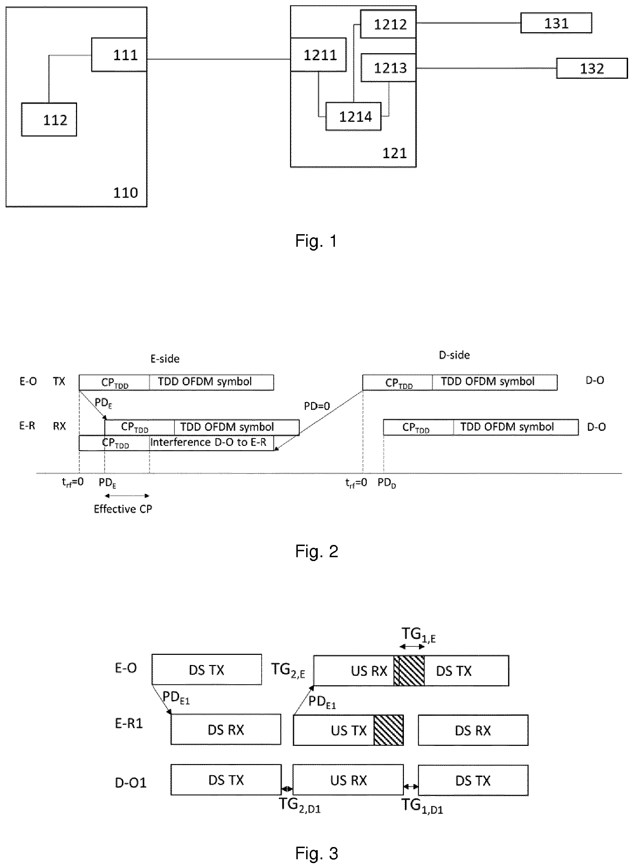

Fig. 1 shows a schematic block diagram of a network topology according to an embodiment of the present invention.

As shown in Fig. 1, the network comprises a backhauling node 110, a distribution point (DP) 121, two customer premises equipment (CPE) 131 and 132. Examples of DP locations include a cabinet location, mounted on a lamp post or in an underground utility vault, or inside the basement of a building.

The backhauling node 110 which may also be referred to as an exchange node 110 maybe located in a central office or at a remote location. The backhauling node 110 comprises a communication controller 112 connected to one or more transceivers 111 configured to communicate with the DP 121 via respective copper pairs. The copper pairs may be bonded together to provide higher backhauling capacity. The communication controller 112 controls the communication between the transceiver 111 and the DP 121. The backhauling node 110 may comprise further transceivers so as to backhaul further DPs.

As shown in Fig. 1, the DP 121 comprises a backhaul transceiver 1211, two drop transceivers 1212 and 1213 and a communication controller 1214 connected to each of the transceivers.

The backhaul transceiver 1211 is connectable to a backhauling node 110 via a backhaul section. The backhaul section may also be referred to as an exchange section or E-section for short.

The drop transceiver 1212 is connected to a CPE 131 via a drop section comprising a copper pair. The drop transceiver 1213 is connected to another CPE 132 via another drop section comprising a further copper pair. The number of drop transceivers comprised in one DP is given in Fig. 1 by way of example. In other embodiments, the DP may comprise more or less drop transceiver.

Communications over the backhaul and drop sections are organized into downstream and upstream time sub-frames. In an embodiment, communications over at least one of the backhaul and drop sections are Time Division Duplexing, TDD, communications, and are organized into downstream and upstream time sub-frames for exclusive downstream and upstream communications respectively. In an embodiment, communications over one of the backhaul and drop sections are full-duplex, FDX, communications, and are organized into downstream and upstream time sub-frames for FDX downstream-prioritized and FDX upstream-prioritized communications respectively.

Fig. 2 schematically shows a timing diagram according to the prior art.

In the example shown in Fig. 2 the communications on both the backhaul section and the drop section are TDD communications. Each symbol in a sub-frame has a cyclic prefix (CP) section and an OFDM symbol section (or data section).

In the following, the timing diagram of Fig. 2 will be described with respect to the network topology shown in Fig. 1. Downstream sub-frame from the backhauling node 110 (exchange operator-side, or E-O for short) is received at the DP 121 by the backhaul transceiver 1211 (exchange residence-side, or E-R for short) after a propagation delay PD_{E}. The propagation delay PD_{E} is related to the length of the exchange section connecting the backhauling node 110 and the DP 121 and other factors charactering the channel. Downstream sub-frame transmitted by the drop transceiver 1212 (drop operator-side, or D-O for short) towards the CPE 131 onto the drop section is coupled to the E-R without any delay. The coupling from D-O to E-R is a strong interference the present invention aims to tackle.

The DP 121 may comprise a vectoring processor for cancelling near-end crosstalk NEXT between the backhaul transceiver and the drop transceiver. For this purpose, the symbol synchronization is required.

As can be seen from Fig. 2, in the prior art, a downstream sub-frame is transmitted by the drop transceiver 1212 in the DP 121 onto the drop section at the reference time t_{rf}=0, same as the time when a downstream sub-frame is transmitted by the backhauling node onto the backhauling section. The propagation delay from drop section to the backhauling section of the DP is shorter than the propagation delay PD_{E} from the exchange to the DP. Consequently, in order to obtain symbol synchronization, the portion of the CP that may effectively be used to combat delay spread is reduced, thus causing a reduction in the reach of the exchange section (E-side).

The present invention is based on the idea that if the time of transmission at the DP of a downstream sub-frame onto the drop section is aligned with the time of reception at the DP of a downstream sub-frame received from the backhaul section, the length of effective CP will not be reduced, thus the reach of the E-side would not be impacted.

Although not shown on Fig. 2, the transmission by the E-R transceiver of an upstream symbol over the backhauling section couples into the reception of an upstream symbol by the D-O transceiver from the drop section without significant delay. Thus, in this embodiment, the time of reception PD_{D} at the DP of an upstream sub-frame received from the drop section is also aligned with the time of transmission at the DP of an upstream sub-frame transmitted over the backhaul section.

In another example, the communications on the backhaul section are FDX communications, and the communications on the drop section are TDD communications. Because a FDX symbol comprises also a cyclic suffix (CS) to accommodate propagation delay, it is sufficient to align only the time of reception at the DP of an upstream sub-frame received from the drop section and the time of transmission at the DP of an upstream sub-frame transmitted over the backhaul section in order to enable cancellation of near end crosstalk from the upstream signal on the E-side into upstream signal on the D-side. As it is desirable on a FDX link, the start of downstream and upstream transmission are synchronized in order to maximize performance. The start of downstream transmission on the D-side is also synchronized with the start of transmission on the E-side.

In another example, the communications on the backhaul section are TDD communications, and the communications on the drop section are FDX communications. Similar as above, it is sufficient to align only the time of reception at the DP of a downstream sub-frame received from the backhaul section and the time of transmission at the DP of a downstream sub-frame transmitted over the drop section in order to enable cancellation of near end crosstalk from the downstream signal on the D-side into downstream signal on the E-side. The start of downstream transmission on the E-side is also synchronized with the start of transmission on the FDX communication on the D-side.

Fig. 3 schematically shows a timing diagram according to the embodiment shown in Fig. 1.

In the embodiment shown in Fig. 3, the communications on both the backhaul section and the drop section are TDD communications. The backhaul transceiver 1211 in the DP 121 is referred to as E-R1, and the drop transceiver 1212 is referred to as D-O1 in Fig. 3.

As shown in Fig. 3, the time of reception at the DP of a downstream sub-frame received from the backhaul section is aligned the time of transmission at the DP of a downstream sub-frame transmitted over the drop section, and the time of reception of an upstream sub-frame received from the drop section is aligned with a time of transmission of an upstream sub-frame transmitted over the backhaul section.

The time gap TG_{2,D1} between the end of transmission of the downstream sub-frame over the drop section and the beginning of reception of the subsequent upstream sub-frame from the drop section and the time gap TG_{1,D1} between the end of reception of the upstream sub-frame from the drop section and the beginning of transmission of the subsequent downstream sub-frame over the drop section fulfil a minimum time gap constraint. Practical considerations for including such minimum time gap constraint is to allow a context switch for a pipelined simplex transceiver, in which a number of pipeline stages, such as (inverse) Fourier Transform or Vector Processor are shared between the transmit processing and receive processing chains; or to enable switching an analog front end between transmit and receive mode.

In G. fast standard, the time gap TG_{1,D1} is larger than or equal to 6.5 µs. The sum of the time gap TG_{1,D1} and the time gap TG_{2,D1} is the length of one symbol.

In one embodiment, the DP 121 is connected to more than one CPE 131 and 132, the communication controller 1214 configures the time gap to be applied at the respective CPE, namely TG_{1'} between the end of reception of a downstream sub-frame and the beginning of transmission of the subsequent upstream sub-frame and TG_{2'} between the end of transmission of an upstream sub-frame and the beginning of reception of the subsequent downstream sub-frame, so as to align the time of reception at the DP of upstream sub-frames from the CPEs connected to the DP.

Due to the fact that the propagation delay over both backhaul section and the drop section need to be accommodated in the time gap TG_{2,E} at the backhauling node 110 between the end of transmission of the downstream sub-frame over the backhaul section and the beginning of reception of the subsequent upstream sub-frame from the backhaul section, the time gap TG_{2,E} is longer than allowed according to the prior art when the propagation delay becomes sufficiently large.

If it is still desired to keep to the constraint that the sum of TG₁ and TG₂ equals the length of a symbol T_{symbol}, the time gap TG_{1,E} between the end of reception of the upstream sub-frame from the backhaul section and the beginning of transmission of the subsequent downstream sub-frame over the backhaul section is reduced, potentially smaller than the allowed range defined in G.fast. This is not allowed according to the prior art, since a finite time gap is used by the transceiver to switch context and pipeline from upstream reception to downstream transmission.

The solution proposed by the invention is to artificially increase TG_{1,E} by transmitting over the backhaul section a quiet symbol at the last symbol position of an upstream sub-frame or at the first symbol position of a downstream sub-frame, in order to fulfill a minimum time gap constraint between the end of reception of non-quiet symbols of the upstream sub-frame from the backhaul section and the beginning of transmission of non-quiet symbols of the downstream sub-frame over the backhaul section. A quiet symbol is a symbol for which the output transmit power is zero. It doesn't carry precompensation signals from other lines in the vectoring group. It may be constructed by setting the modulator input at the respective transceiver equal to 0 for all sub-carriers.

According to the present invention, the time gap TG_{1,E} may have a negative value, rending TG_{1,E} + TG_{2,E} = T_{symbol}.

A single quiet symbol is sufficient, since PD_{E1} is much smaller than the symbol duration. The parameters available to configure the Normal Operation Interval (NOI) and Discontinuous Operation Interval (DOI) mechanism of G.fast can be used to force the last symbol position to be quiet. As in the embodiment shown in Fig. 3, the communication controller 112 in the backhauling node 110 may configure the backhaul transceiver 1211 to transmit a quiet symbol at the last symbol position of an upstream sub-frame onto the backhaul section.

A consequence of the (upstream) quiet symbol is that the (upstream) backhaul capacity is reduced. But this may not be noticeable by the end users, because the backhaul is shared across the users (statistical multiplexing). Alternatively, the number of backhaul copper pairs may be scaled up to compensate.

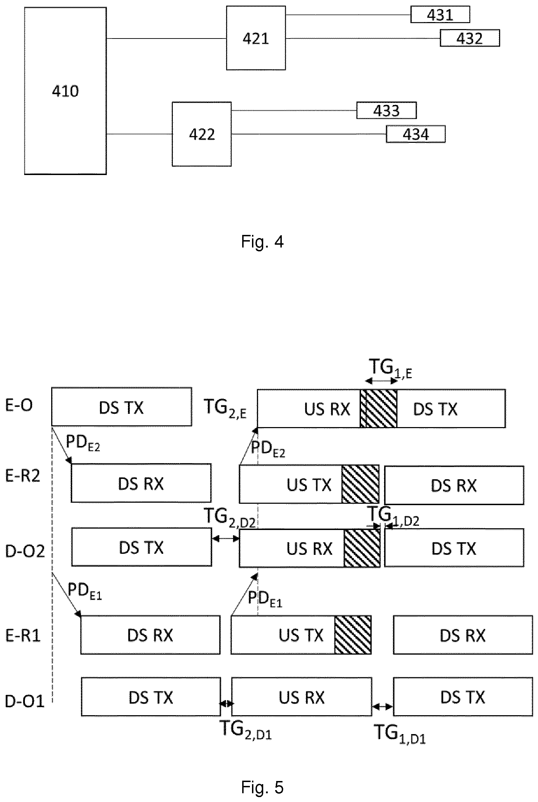

Fig. 4 shows a schematic block diagram of a network topology according to another embodiment of the present invention.

As shown in Fig. 4, the network comprises a backhauling node 410, two distribution DPs 421 and 422, four CPEs 431, 432, 433 and 434. These entities may be similar to those described above with respect to Fig. 1, thus detailed description will not be repeated here.

In Fig. 4, the backhauling node 410 is configured to backhaul the DPs 421 and 422. The backhaul section E1 connecting the DP 421 and the backhauling node 410 has longer propagation delay or is longer than the backhaul section E2 connecting the DP 422 and the backhauling node 410. The DP 421 is determined as a reference DP.

Fig. 5 schematically shows a timing diagram according to the embodiment shown in Fig. 4.

In the embodiment shown in Fig. 5, the communications on both backhaul section and the drop section are TDD communications. In Fig. 5, the backhaul transceiver (not shown) in the reference DP 421 is referred to as E-R1, one of the drop transceiver (not shown) in the reference DP 421 is referred to as D-O1, the backhaul transceiver (not shown) in the DP 422 is referred to as E-R2, and one of the drop transceiver (not shown) in the DP 422 is referred to as D-O2.

In Fig. 5, at each of the DP, the time of reception of a downstream sub-frame received from the backhaul section is aligned with the time of transmission of a downstream sub-frame transmitted over their respective drop section, and the time of reception of an upstream sub-frame received from the drop section is aligned with a time of transmission of an upstream sub-frame transmitted over their respective backhaul section.

As shown in Fig. 5, a communication controller (not shown) in the backhauling node 410 configures the time gap to be applied at each DP between the end of reception of the downstream sub-frame from the backhauling section and the beginning of transmission of the subsequent upstream sub-frame over the backhauling section, so as to align at the backhauling node a time of reception of upstream sub-frames from the DPs connected to the backhauling node. The DP may then align the timing on the drop section with the timing at the backhauling section as per the present invention.

Additionally or alternatively, the backhauling node may also instruct a time gap value to be applied at a DP on the drop side, for example, the time gap to be applied at each DP between the end of transmission of the downstream sub-frame over the drop section and the beginning of reception of the subsequent upstream sub-frame from the drop section.

At the reference DP 421, the time gap TG_{2,D1} between the end of transmission of the downstream sub-frame over the drop section D1 and the beginning of reception of the subsequent upstream sub-frame from the drop section D1 and the time gap TG_{1,D1} between the end of reception of the upstream sub-frame from the drop section D1 and the beginning of transmission of the subsequent downstream sub-frame over the drop section D1 fulfil a minimum time gap constraint, as explained above. The rate-reach performance of lines connected to the reference DP is not impacted.

At the other DP 422, since the propagation delay on the backhaul section D2 is shorter than the propagation delay on the backhaul section D1, the time gap TG_{2,D2} between the end of transmission of the downstream sub-frame over the drop section D2 and the beginning of reception of the subsequent upstream sub-frame from the drop section is larger than the time gap TG_{2,D1}. This results in a reduced time gap TG_{1,D2} between the end of reception of the upstream sub-frame from the drop section and the beginning of transmission of the subsequent downstream sub-frame over the drop section comparing to TG_{1,D1}.

As a result, the time gap TG_{1,D2} is potentially smaller than the allowed range defined in G.fast. Therefore, according to the present invention, the DP 422 may configure the CPE 433 to transmit a quiet symbol at the last symbol position of an upstream sub-frame transmitted over the drop section, or the DP 422 may transmit a quiet symbol at the first symbol position of a downstream sub-frame transmitted over the drop section, in order to fulfill a minimum time gap constraint between the end of reception of non-quiet symbols of the upstream sub-frame from the drop section and the beginning of transmission of non-quiet symbols of the downstream sub-frame over the drop section.

In another embodiment, the DP 422 is determined as reference DP. In that case, a quiet symbol may be required at the DP 421 either at the last symbol position of the downstream sub-frame to be transmitted onto the drop section or at the first symbol position of the upstream sub-frame received from the drop section in order to fulfill a minimum time gap constraint between the end of transmission of non-quiet symbols of the downstream sub-frame over the drop section and the beginning of reception of non-quiet symbols of the upstream sub-frame from the drop section.

Similar as in the backhaul section, a single quiet symbol on the drop section is sufficient, since PD_{D} is much smaller than the symbol duration. However, quiet symbols on the drop section may cause capacity loss. In case a TDD frame consists of 35 useful symbol positions, such as is typical in G.fast, the impact on DPs with quiet symbol is 1/35 (~3%) in aggregate data rate reduction.

In another embodiment where the backhauling node is configured to backhaul more than one DP, the reference DP may be selected in a way that the capacity loss due to quiet symbols on the drop section is minimized.

In another embodiment, the reference DP may also be virtual, a time gap value TG_{2,E} between the end of transmission of the downstream sub-frame over the backhaul section and the beginning of reception of the upstream sub-frame from the backhaul section is determined in such a way that a capacity loss due to quiet symbols on the drop section is minimized. Indeed, all DPs that have a similar propagation delay to the exchange as the (potentially virtual) reference DP don't require the insertion of a quiet symbol on the drop section. The reference DP may hence be selected to correspond to a reference propagation delay that maximizes the number of DPs for which no quiet symbol is inserted on the drop side or maximizes the number of CPEs connected to such DPs.

There may be crosstalk between DPs, originating from a combination of E-D coupling, attenuation over a non-coupled segment, and NEXT over a coupled segment. This can be mitigated by Multi-User Full Duplex (MU-FDX)-inspired crosstalk mitigation techniques: in downstream, the backhaul link may perceive DP-DP crosstalk, reducing signal noise ratio (SNR) on the backhaul link. In upstream, the upstream transmit power on the backhaul is reduced to protect the upstream on the backhaul link of the neighboring DP. By design, these SNR or power spectrum density (PSD) reductions occur on the backhaul side, where impact on the aggregate backhaul capacity can be reduced thanks to statistical multiplexing and to the selection of the appropriate number of backhaul pairs.

## Claims

1. A method for backhauling a distribution point, DP (121, 421, 422), connected to a backhauling node (110, 410) via a backhaul section and connected to at least one Customer Premises Equipment, CPE (131, 431,433), via a drop section, communications over the backhaul and drop sections being organized into downstream and upstream time sub-frames;
the method comprising:
- aligning a time of reception at the DP (121, 421, 422) of a downstream sub-frame received from the backhaul section and a time of transmission at the DP (121, 421, 422) of a downstream sub-frame transmitted over the drop section;
and/or aligning a time of reception at the DP (121, 421, 422) of an upstream sub-frame received from the drop section and a time of transmission at the DP (121, 421, 422) of an upstream sub-frame transmitted over the backhaul section wherein the method further comprises at least one of:
i) transmitting over the backhaul section a quiet symbol at the last symbol position of an upstream sub-frame or at the first symbol position of a downstream sub-frame, in order to fulfill a minimum time gap constraint between the end of reception of non-quiet symbols of the upstream sub-frame from the backhaul section and the beginning of transmission of non-quiet symbols of the downstream sub-frame over the backhaul section; and
ii) transmitting over the drop section a quiet symbol at the last symbol position of an upstream sub-frame or at the first symbol position of a downstream sub-frame, in order to fulfill a minimum time gap constraint between the end of reception of non-quiet symbols of the upstream sub-frame from the drop section and the beginning of transmission of non-quiet symbols of the downstream sub-frame over the drop section; and
iii) transmitting over the drop section a quiet symbol at the last symbol position of a downstream sub-frame or at the first symbol position of an upstream sub-frame, in order to fulfill a minimum time gap constraint between the end of transmission of non-quiet symbols of the downstream sub-frame over the drop section and the beginning of reception of non-quiet symbols of the upstream sub-frame from the drop section.

2. The method according to claim 1,
wherein communications over at least one of the backhaul and drop sections are Time Division Duplexing, TDD, communications, and are organized into downstream and upstream time sub-frames for exclusive downstream and upstream communications respectively.

3. The method according to claim 1,
wherein communications over one of the backhaul and drop sections are full-duplex, FDX, communications, and are organized into downstream and upstream time sub-frames for FDX downstream-prioritized and FDX upstream-prioritized communications respectively.

4. The method according to claim 1,
wherein the backhauling node (410) is further connected to at least one further DP (422), the method further comprising:
- aligning at the backhauling node (410) a time of reception of upstream sub-frames from the DPs connected to the backhauling node (410).

5. The method according to claim 4,
wherein one of the DPs connected to the backhauling node (410) is determined as a reference DP (421), wherein a communication line between the reference DP (421) and the backhauling node (410) is longer than respective communication lines between the other DPs (422) and the backhauling node (410),
and wherein at the reference DP (421), a time gap (TG_{2,D1}) between the end of transmission of the downstream sub-frame over the drop section and the beginning of reception of the upstream sub-frame from the drop section and a time gap (TG_{1,D1}) between the end of reception of the upstream sub-frame from the drop section and the beginning of transmission of the downstream sub-frame over the drop section fulfil a minimum time gap constraint.

6. The method according to claim 1 and further comprising at least one of steps of steps ii) and iii),
wherein the backhauling node (410) is further connected to at least one further DP (422), the method further comprising:
- determining a time gap value (TG_{2,E}) between the end of transmission of the downstream sub-frame over the backhaul section and the beginning of reception of the upstream sub-frame from the backhaul section in such a way that a capacity loss due to quiet symbols on the drop section is minimized.

7. The method according to claim 1,
the DP (121, 421, 422) being connected to more than one CPE, the method further comprising:
- aligning a time of reception at the DP (121, 421, 422) of upstream sub-frames from the CPEs connected to the DP (121, 421, 422).

8. A distribution point, DP (121, 421, 422), comprising:
a backhaul transceiver (1211), connectable to a backhauling node (110, 410) via a backhaul section;
a drop transceiver (1212), connectable to a Customer Premises Equipment, CPE (131, 431, 433), via a drop section, communications over the backhaul and drop sections being organized into downstream and upstream time sub-frames; and
a communication controller (1214), configured to align a time of reception at the DP (121, 421, 422) of a downstream sub-frame received from the backhaul section and a time of transmission at the DP (121, 421, 422) of a downstream sub-frame transmitted over the drop section; and/or to align a time of reception at the DP (121, 421, 422) of an upstream sub-frame received from the drop section and a time of transmission at the DP (121, 421, 422) of an upstream sub-frame transmitted over the backhaul section;
wherein the distribution point, DP (121, 421, 422) is further configured according to at least one of:
- the backhaul transceiver (1211) being configured to transmit a quiet symbol at the last symbol position of an upstream sub-frame transmitted over the backhaul section, in order to fulfill a minimum time gap constraint between the end of reception of non-quiet symbols of the upstream sub-frame from the backhaul section and the beginning of transmission of non-quiet symbols of the downstream sub-frame over the backhaul section; and
- the communication controller (1214) being further configured to: configure over the drop section a symbol at the last symbol position of an upstream sub-frame or at the first symbol position of a downstream sub-frame to be quiet, in order to fulfill a minimum time gap constraint between the end of reception of non-quiet symbols of the upstream sub-frame from the drop section and the beginning of transmission of non-quiet symbols of the downstream sub-frame over the drop section.

9. A backhauling node (110, 410), connectable to a distribution point, DP (121, 421, 422), via a backhaul section, communications over the backhaul being organized into downstream and upstream time sub-frames; the backhaul node (110, 410) comprising:
a communication controller, configured to configure over the backhaul section a symbol at the last symbol position of an upstream sub-frame or at the first symbol position of a downstream sub-frame to be quiet, in order to fulfill a minimum time gap constraint between the end of reception of non-quiet symbols of the upstream sub-frame from the backhaul section and the beginning of transmission of non-quiet symbols of the downstream sub-frame over the backhaul section.

10. A Customer Premises Equipment, CPE (131, 431, 433), connectable to a distribution point, DP (121, 421, 422), via a drop section, communications over the drop sections being organized into downstream and upstream time sub-frames; the CPE (131, 431, 433) comprising:
a transceiver, configured to transmit a quiet symbol at the last symbol position of an upstream sub-frame transmitted over the drop section, in order to fulfill a minimum time gap constraint between the end of reception of non-quiet symbols of the upstream sub-frame from the drop section and the beginning of transmission of non-quiet symbols of the downstream sub-frame over the drop section.

## Patentansprüche

1. Verfahren zum Backhauling eines Verteilungspunktes, DP (121, 421, 422), der via einen Backhaulingbereich mit mindestens einem Backhaulingknoten (110, 410) verbunden ist und via einen Trennbereich mit mindestens einer Kundenstandortausrüstung, CPE (131, 431, 433) verbunden ist, wobei die Kommunikation über den Backhauling- und den Trennbereich in stromabwärtige und stromaufwärtige Zeitunterframes organisiert ist;
wobei das Verfahren Folgendes umfasst:
- Angleichen einer Zeit des Empfangs eines stromabwärtigen Unterframes, der vom Backhaulingbereich empfangen wird, am DP (121, 421, 422) und einer Zeit der Übertragung eines stromabwärtigen Unterframes, der über den Trennbereich übertragen wird, am DP (121, 421, 422) und/oder Angleichen einer Zeit des Empfangs eines stromaufwärtigen Unterframes, der vom Trennbereich empfangen wird, am DP (121, 421, 422) und einer Zeit der Übertragung eines stromaufwärtigen Unterframes, der über den Backhaulingbereich übertragen wird, am DP (121, 421, 422), wobei das Verfahren ferner mindestens eines von Folgendem umfasst:
i) Übertragen eines ruhigen Symbols an der letzten Symbolposition eines stromaufwärtigen Unterframes oder an der ersten Symbolposition eines stromabwärtigen Unterframes über den Backhaulingbereich, um eine minimale Zeitlückeneinschränkung zwischen dem Ende des Empfangs von nicht ruhigen Symbolen des stromaufwärtigen Unterframes vom Backhaulingbereich und dem Anfang der Übertragung von nicht ruhigen Symbolen des stromabwärtigen Unterframes über den Backhaulingbereich zu erfüllen; und
ii) Übertragen eines ruhigen Symbols an der letzten Symbolposition eines stromaufwärtigen Unterframes oder an der ersten Symbolposition eines stromabwärtigen Unterframes über den Trennbereich, um eine minimale Zeitlückeneinschränkung zwischen dem Ende des Empfangs von nicht ruhigen Symbolen des stromaufwärtigen Unterframes vom Trennbereich und dem Anfang der Übertragung von nicht ruhigen Symbolen des stromabwärtigen Unterframes über den Trennbereich zu erfüllen; und
iii) Übertragen eines ruhigen Symbols an der letzten Symbolposition eines stromabwärtigen Unterframes oder an der ersten Symbolposition eines stromaufwärtigen Unterframes über den Trennbereich, um eine minimale Zeitlückeneinschränkung zwischen dem Ende der Übertragung von nicht ruhigen Symbolen des stromabwärtigen Unterframes über den Trennbereich und dem Anfang des Empfangs von nicht ruhigen Symbolen des stromaufwärtigen Unterframes vom Trennbereich zu erfüllen.

2. Verfahren nach Anspruch 1,
wobei die Kommunikation über mindestens einen des Backhauling- und des Trennbereichs eine Zeitduplex(TDD)-Kommunikation ist und zur exklusiven stromabwärtigen bzw. stromaufwärtigen Kommunikation in stromabwärtige und stromaufwärtige Zeitunterframes organisiert ist.

3. Verfahren nach Anspruch 1,
wobei die Kommunikation über einen des Backhauling- und des Trennbereichs eine Vollduplex(FDX)-Kommunikation ist und für eine Kommunikation mit stromabwärtiger FDX-Priorisierung bzw. mit stromaufwärtiger FDX-Priorisierung in stromabwärtige und stromaufwärtige Zeitunterframes organisiert ist.

4. Verfahren nach Anspruch 1,
wobei der Backhaulingknoten (410) ferner mit mindestens einem weiteren DP (422) verbunden ist, wobei das Verfahren ferner Folgendes umfasst:
- Angleichen einer Zeit des Empfangs von stromaufwärtigen Unterframes am Backhaulingknoten (410) von den DPs, die mit dem Backhaulingknoten (410) verbunden sind.

5. Verfahren nach Anspruch 4,
wobei einer der DPs, die mit dem Backhaulingknoten (410) verbunden sind, als ein Referenz-DP (421) bestimmt wird, wobei eine Kommunikationsleitung zwischen dem Referenz-DP (421) und dem Backhaulingknoten (410) länger als jeweilige Kommunikationsleitungen zwischen den anderen DPs (422) und dem Backhaulingknoten (410) ist,
und wobei eine Zeitlücke (TG_{2,D1}) zwischen dem Ende der Übertragung des stromabwärtigen Unterframes über den Trennbereich und dem Anfang des Empfangs des stromaufwärtigen Unterframes vom Trennbereich und eine Zeitlücke (TG_{1,D1}) zwischen dem Ende des Empfangs des stromaufwärtigen Unterframes vom Trennbereich und dem Anfang der Übertragung des stromabwärtigen Unterframes über den Trennbereich am Referenz-DP (421) eine minimale Zeitlückeneinschränkung erfüllen.

6. Verfahren nach Anspruch 1, das ferner mindestens einen der Schritte ii) und iii) umfasst,
wobei der Backhaulingknoten (410) ferner mit mindestens einem weiteren DP (422) verbunden ist, wobei das Verfahren ferner Folgendes umfasst:
- Bestimmen des Zeitlückenwertes (TG_{2,E}) zwischen dem Ende der Übertragung des stromabwärtigen Unterframes über den Backhaulingbereich und dem Anfang des Empfangs des stromaufwärtigen Unterframes vom Backhaulingbereich in einer Weise, dass ein Kapazitätsverlust infolge von ruhigen Symbolen im Trennbereich minimiert ist.

7. Verfahren nach Anspruch 1,
wobei der DP (121, 421, 422) mit mehr als einer CPE verbunden ist, wobei das Verfahren ferner Folgendes umfasst:
- Angleichen einer Zeit des Empfangs von stromaufwärtigen Unterframes am DP (121, 421, 422) von den CPEs, die mit dem DP (121, 421, 422) verbunden sind.

8. Verteilungspunkt, DP (121, 421, 422), der Folgendes umfasst:
einen Backhaulingsendeempfänger (1211), der via einen Backhaulingbereich mit einem Backhaulingknoten (110, 410) verbindbar ist;
einen Trennsendeempfänger (1212), der via einen Trennbereich mit einer Kundenstandortausrüstung, CPE (131, 431, 433) verbindbar ist, wobei die Kommunikation über den Backhauling- und den Trennbereich in stromabwärtige und stromaufwärtige Zeitunterframes organisiert ist; und
eine Kommunikationssteuerung (1214), die dazu ausgelegt ist, eine Zeit des Empfangs eines stromabwärtigen Unterframes, der vom Backhaulingbereich empfangen wird, am DP (121, 421, 422) und eine Zeit der Übertragung eines stromabwärtigen Unterframes, der über den Trennbereich übertragen wird, am DP (121, 421, 422) anzugleichen und/oder eine Zeit des Empfangs eines stromaufwärtigen Unterframes, der vom Trennbereich empfangen wird, am DP (121, 421, 422) und einer Zeit der Übertragung eines stromaufwärtigen Unterframes, der über den Backhaulingbereich übertragen wird, am DP (121, 421, 422) anzugleichen;
wobei der Verteilungspunkt, DP (121, 421, 422) ferner gemäß mindestens einem von Folgendem ausgelegt ist:
- wobei der Backhaulingsendeempfänger (1211) dazu ausgelegt ist, an der letzten Symbolposition eines stromaufwärtigen Unterframes, der über den Backhaulingbereich übertragen wird, ein ruhiges Symbol zu übertragen, um eine minimale Zeitlückeneinschränkung zwischen dem Ende des Empfangs von nicht ruhigen Symbolen des stromaufwärtigen Unterframes vom Backhaulingbereich und dem Anfang der Übertragung von nicht ruhigen Symbolen des stromabwärtigen Unterframes über den Backhaulingbereich zu erfüllen; und
- wobei die Kommunikationssteuerung (1214) ferner zu Folgendem ausgelegt ist: Auslegen eines Symbols an der letzten Symbolposition eines stromaufwärtigen Unterframes oder an der ersten Symbolposition eines stromabwärtigen Unterframes über den Trennbereich derart, dass es ruhig ist, um eine minimale Zeitlückeneinschränkung zwischen dem Ende des Empfangs von nicht ruhigen Symbolen des stromaufwärtigen Unterframes vom Trennbereich und dem Anfang der Übertragung von nicht ruhigen Symbolen des stromabwärtigen Unterframes über den Trennbereich zu erfüllen.

9. Backhaulingknoten (110, 410), der via einen Backhaulingbereich mit einem Verteilungspunkt, DP (121, 421, 422) verbindbar ist, wobei die Kommunikation über den Backhaul in stromabwärtige und stromaufwärtige Zeitunterframes organisiert ist; wobei der Backhaulingknoten (110, 410) Folgendes umfasst:
eine Kommunikationssteuerung, die dazu ausgelegt ist, ein Symbol an der letzten Symbolposition eines stromaufwärtigen Unterframes oder an der ersten Symbolposition eines stromabwärtigen Unterframes über den Backhaulingbereich derart auszulegen, dass es ruhig ist, um eine minimale Zeitlückeneinschränkung zwischen dem Ende des Empfangs von nicht ruhigen Symbolen des stromaufwärtigen Unterframes vom Backhaulingbereich und dem Anfang der Übertragung von nicht ruhigen Symbolen des stromabwärtigen Unterframes über den Backhaulingbereich zu erfüllen.

10. Kundenstandortausrüstung, CPE (131, 431, 433), die via einen Trennbereich mit einem Verteilungspunkt, DP (121, 421, 422) verbindbar ist, wobei die Kommunikation über die Trennbereiche in stromabwärtige und stromaufwärtige Zeitunterframes organisiert ist; wobei die CPE Folgendes (131, 431, 433) umfasst:
einen Sendeempfänger, der dazu ausgelegt ist, an der letzten Symbolposition eines stromaufwärtigen Unterframes, der über den Trennbereich übertragen wird, ein ruhiges Symbol zu übertragen, um eine minimale Zeitlückeneinschränkung zwischen dem Ende des Empfangs von nicht ruhigen Symbolen des stromaufwärtigen Unterframes vom Trennbereich und dem Anfang der Übertragung von nicht ruhigen Symbolen des stromabwärtigen Unterframes über den Trennbereich zu erfüllen.

## Revendications

1. Procédé pour le raccordement d'un point de distribution, DP (121, 421, 422), connecté à un nœud de raccordement (110, 410) via une section de raccord et connecté à au moins un équipement des locaux d'abonné, CPE (131, 431, 433), via une section de dérivation, des communications sur les sections de raccord et de dérivation étant organisées en sous-trames temporelles en aval et en amont ;
le procédé comprenant :
- l'alignement d'un temps de réception au niveau du DP (121, 421, 422) d'une sous-trame en aval reçue à partir de la section de raccord et d'un temps d'émission au niveau du DP (121, 421, 422) d'une sous-trame en aval émise sur la section de dérivation ; et/ou l'alignement d'un temps de réception au niveau du DP (121, 421, 422) d'une sous-trame en amont reçue à partir de la section de dérivation et d'un temps d'émission au niveau du DP (121, 421, 422) d'une sous-trame en amont émise sur la section de raccord
dans lequel le procédé comprend en outre au moins l'une parmi :
i) l'émission, sur la section de raccord, d'un symbole silencieux à la dernière position de symbole d'une sous-trame en amont ou à la première position de symbole d'une sous-trame en aval, afin de respecter une contrainte d'intervalle temporel minimal entre la fin de réception de symboles non silencieux de la sous-trame en amont à partir de la section de raccord et le début d'émission de symboles non silencieux de la sous-trame en aval sur la section de raccord ; et
ii) l'émission, sur la section de dérivation, d'un symbole silencieux à la dernière position de symbole d'une sous-trame en amont ou à la première position de symbole d'une sous-trame en aval, afin de respecter une contrainte d'intervalle temporel minimal entre la fin de réception de symboles non silencieux de la sous-trame en amont à partir de la section de dérivation et le début d'émission de symboles non silencieux de la sous-trame en aval sur la section de dérivation ; et
iii) l'émission, sur la section de dérivation, d'un symbole silencieux à la dernière position de symbole d'une sous-trame en aval ou à la première position de symbole d'une sous-trame en amont, afin de respecter une contrainte d'intervalle temporel minimal entre la fin d'émission de symboles non silencieux de la sous-trame en aval sur la section de dérivation et le début de réception de symboles non silencieux de la sous-trame en amont à partir de la section de dérivation.

2. Procédé selon la revendication 1,
dans lequel des communications sur au moins l'une des sections de raccord et de dérivation sont des communications en duplex à répartition dans le temps, TDD, et sont organisées en sous-trames temporelles en aval et en amont pour des communications exclusives en aval et en amont respectivement.

3. Procédé selon la revendication 1,
dans lequel des communications sur l'une des sections de raccord et de dérivation sont des communications en duplex intégral, FDX, et sont organisées en sous-trames temporelles en aval et en amont pour des communications priorisées en aval en FDX et priorisées en amont en FDX respectivement.

4. Procédé selon la revendication 1,
dans lequel le nœud de raccordement (410) est en outre connecté à au moins un DP supplémentaire (422), le procédé comprenant en outre :
- l'alignement, au niveau du nœud de raccordement (410), d'un temps de réception de sous-trames en amont à partir des DP connectés au nœud de raccordement (410).

5. Procédé selon la revendication 4,
dans lequel l'un des DP connectés au nœud de raccordement (410) est déterminé comme étant un DP de référence (421), dans lequel une ligne de communication entre le DP de référence (421) et le nœud de raccordement (410) est plus longue que des lignes de communication respectives entre les autres DP (422) et le nœud de raccordement (410),
et dans lequel au niveau du DP de référence (421), un intervalle temporel (TG_{2,D1}) entre la fin d'émission de la sous-trame en aval sur la section de dérivation et le début de réception de la sous-trame en amont à partir de la section de dérivation et un intervalle temporel (TG_{1,D1}) entre la fin de réception de la sous-trame en amont à partir de la section de dérivation et le début d'émission de la sous-trame en aval sur la section de dérivation respectent une contrainte d'intervalle temporel minimal.

6. Procédé selon la revendication 1 et comprenant en outre au moins l'une des étapes ii) et iii),
dans lequel le nœud de raccordement (410) est en outre connecté à au moins un DP supplémentaire (422), le procédé comprenant en outre :
- la détermination d'une valeur d'intervalle temporel (TG_{2,E}) entre la fin d'émission de la sous-trame en aval sur la section de raccord et le début de réception de la sous-trame en amont à partir de la section de raccord d'une manière telle qu'une perte de capacité due à des symboles silencieux sur la section de dérivation est rendue minimale.

7. Procédé selon la revendication 1,
le DP (121, 421, 422) étant connecté à plus d'un CPE, le procédé comprenant en outre :
- l'alignement d'un temps de réception au niveau du DP (121, 421, 422) de sous-trames en amont provenant des CPE connectés au DP (121, 421, 422).

8. Point de distribution, DP (121, 421, 422), comprenant :
un émetteur-récepteur de raccord (1211), apte à être connecté à un nœud de raccordement (110, 410) via une section de raccord ;
un émetteur-récepteur de dérivation (1212), apte à être connecté à un équipement des locaux d'abonné, CPE (131, 431, 433), via une section de dérivation, des communications sur les sections de raccord et de dérivation étant organisées en sous-trames temporelles en aval et en amont ; et
un dispositif de commande de communication (1214), configuré pour aligner un temps de réception au niveau du DP (121, 421, 422) d'une sous-trame en aval reçue à partir de la section de raccord et un temps d'émission au niveau du DP (121, 421, 422) d'une sous-trame en aval émise sur la section de dérivation ; et/ou pour aligner un temps de réception au niveau du DP (121, 421, 422) d'une sous-trame en amont reçue à partir de la section de dérivation et un temps d'émission au niveau du DP (121, 421, 422) d'une sous-trame en amont émise sur la section de raccord ;
dans lequel le point de distribution, DP (121, 421, 422) est en outre configuré selon au moins l'un parmi :
- l'émetteur-récepteur de raccord (1211) étant configuré pour émettre un symbole silencieux à la dernière position de symbole d'une sous-trame en amont émise sur la section de raccord, afin de respecter une contrainte d'intervalle temporel minimal entre la fin de réception de symboles non silencieux de la sous-trame en amont à partir de la section de raccord et le début d'émission de symboles non silencieux de la sous-trame en aval sur la section de raccord ; et
- le dispositif de commande de communication (1214) étant en outre configuré pour : configurer, sur la section de dérivation, un symbole à la dernière position de symbole d'une sous-trame en amont ou à la première position de symbole d'une sous-trame en aval afin qu'il soit silencieux, afin de respecter une contrainte d'intervalle temporel minimal entre la fin de réception de symboles non silencieux de la sous-trame en amont à partir de la section de dérivation et le début d'émission de symboles non silencieux de la sous-trame en aval sur la section de dérivation.

9. Nœud de raccordement (110, 410) apte à être connecté à un point de distribution, DP (121, 421, 422), via une section de raccord, des communications sur le raccord étant organisées en sous-trames temporelles en aval et en amont ; le nœud de raccord (110, 410) comprenant :
un dispositif de commande de communication, configuré pour configurer, sur la section de raccord, un symbole à la dernière position de symbole d'une sous-trame en amont ou à la première position de symbole d'une sous-trame en aval afin qu'il soit silencieux, afin de respecter une contrainte d'intervalle temporel minimal entre la fin de réception de symboles non silencieux de la sous-trame en amont à partir de la section de raccord et le début d'émission de symboles non silencieux de la sous-trame en aval sur la section de raccord.

10. Équipement des locaux d'abonné, CPE (131, 431, 433), apte à être connecté à un point de distribution, DP (121, 421, 422), via une section de dérivation, des communications sur les sections de dérivation étant organisées en sous-trames temporelles en aval et en amont ; le CPE (131, 431, 433) comprenant :
un émetteur-récepteur, configuré pour émettre un symbole silencieux à la dernière position de symbole d'une sous-trame en amont émise sur la section de dérivation, afin de respecter une contrainte d'intervalle temporel minimal entre la fin de réception de symboles non silencieux de la sous-trame en amont à partir de la section de dérivation et le début d'émission de symboles non silencieux de la sous-trame en aval sur la section de dérivation.
